# EUROPÄISCHE PATENTSCHRIFT

(11) **EP 3 254 002 B1**
(45) Veröffentlichungstag und Bekanntmachung des Hinweises auf die Patenterteilung: **17.04.2019**
(21) Anmeldenummer: 16705422.0
(22) Anmeldetag: 14.01.2016
(51) Int. Cl.: F16J 15/06

(54) **DICHTUNGSVORRICHTUNG**
SEALING DEVICE
DISPOSITIF D'ÉTANCHÉITÉ

(30) Priorität: 05.02.2015 DE 102015101638
(43) Veröffentlichungstag der Anmeldung: 13.12.2017
(73) Patentinhaber: Dittmar, Steffen, 72070 Tübingen (DE)
(72) Erfinder: Dittmar, Steffen, 72070 Tübingen (DE)
(74) Vertreter: Späth, Dieter
(86) Internationale Anmeldenummer: PCT/DE2016/100017
(87) Internationale Veröffentlichungsnummer: WO 2016/124172

(56) Entgegenhaltungen:
- EP-A1- 0 550 941

## Beschreibung

Die Erfindung betrifft eine Dichtungsvorrichtung gemäß dem Oberbegriff des Anspruchs 1.

Dichtungsvorrichtungen werden für sehr unterschiedliche Anwendungsbereiche verwendet (siehe EP-A-0 550 941), wie z. B. an Teleskopgabeln von Fahrrädern und an sonstigen axial verstellbaren Kolbenstangen. Es ist allgemein bekannt, Vorderradgabeln von Fahrrädern mittels so genannter Teleskopgabeln federnd und stoßgedämpft an einem Fahrrad anzuordnen. Das vordere Laufrad wird dabei an seiner Radachse beidseitig an der Teleskopgabel befestigt. Die Teleskopgabel kann Federelemente und Dämpfungselemente umfassen, um am Laufrad auftretende Stöße gedämpft abzufedern.

Die Arbeitszylinder der Teleskopgabel, in die eine Kolbenstange eintaucht, sind gegenüber der Kolbenstange mittels einer Dichtungsvorrichtung möglichst staub- und wasserdicht abgedichtet. Aus der DE 195 33 005 A1 ist eine solche Dichtungsvorrichtung für Teleskopgabeln von Fahrrädern bekannt. Auch die EP 1 378 681 A1 zeigt eine Dämpfungsvorrichtung für einen Zweirohrstoßdämpfer mit einer Dichtungsvorrichtung, bei der im Gehäuse der Dichtungsvorrichtung in Ringnuten Dichtungsringe einliegen, die die eintauchende Kolbenstange abdichtend umgreifen.

Bei den bekannten Dichtungsvorrichtungen besteht häufig das Problem, dass Fertigungstoleranzen im Bereich der verwendeten Dichtungsringe und des Gehäuses, welches die Dichtungsringe in Ringnuten oder in sonstigen Einbauräumen aufnimmt, sich ungünstig auf die Schmutz-Abstreiffunktion und die Abdichtfunktion der Dichtungsvorrichtung auswirken. Auch auftretende Vibrationen im Bereich der Dichtungsringe können sich auf diese Funktionen negativ auswirken.

Der Erfindung liegt die Aufgabe zugrunde, eine Dichtungsvorrichtung zu schaffen, die möglichst geringe Reibung und gute Dichtungseigenschaften hat.

Die Lösung dieser Aufgabe erhält man mit den im Anspruch 1 aufgeführten Merkmalen. Die erfindungsgemäße Dichtungsvorrichtung besitzt ein Gehäuse, in welchem die verwendeten Dichtungsringe in Ringnuten schwingungsgedämpft einliegen, was durch die Verwendung wenigstens einer Erhebung an einer der gegenüberliegenden Seitenwänden der Ringnuten erreicht wird. Die Erhebung drückt mit einer geringen Kraft gegen den einliegenden Dichtungsring, der dadurch bezüglich seitlicher Bewegungen gedämpft wird. Vorzugsweise befinden sich jeweils an gegenüberliegenden Seitenwänden der Ringnuten jeweils einander gegenüberliegend angeordnete Erhebungen.

Die Erhebungen befinden sich im Bereich der zur Kolbenstange weisenden Nutöffnung der Ringnuten. Dabei wird der Öffnungsbereich der Ringnuten, in welchen die Dichtungsringe einliegen, optimal gegenüber Umgebungseinflüssen wie Staub und Wasser geschützt, wenn die Erhebungen als Ringrand ausgebildet sind. Außerdem dichten die Erhebungen den Öffnungsbereich ab. Selbst wenn die Erhebungen nur punktuell angeordnet sind, erhält man auch bereits dadurch eine Dämpfungsfunktion für die Dichtungsringe und damit auch für radiale Auslenkungen der jeweiligen Kolbenstange.

Die Stärke der Erhebungen kann vom jeweiligen Einsatzbereich der Dichtungsvorrichtung abhängen. Gute Ergebnisse bezüglich der Abdichtfunktion und der Dämpfungseigenschaften wurden mit Erhebungen gemacht, die den Ringraum der Ringnut um 5% bis 20% im Bereich der Erhebungen einengen. Je nach Anwendungsfall können aber auch stärker hervortretende Erhebungen vorgesehen werden. Die Dichtungsvorrichtung kann eine oder mehrere Ringnuten besitzen, die ebenso wie der in dieser einliegende Dichtungsring gegenüber der Axialrichtung der Kolbenstange geneigt ausgerichtete Seitenwände haben. Der Neigungswinkel ist vorzugsweise bezogen auf die Kolbenstange ein stumpfer Winkel, der zwischen 0° und 90°, vorzugsweise deutlich über 45° bis maximal 90° gegenüber der Axialrichtung der Kolbenstange beträgt. Durch den Neigungswinkel von Ringnut und Dichtungsring erhält man eine weitere Dämpfungseigenschaft im Bereich des jeweiligen Dichtungsrings, was sich auf das gesamte Federungs- und Dämpfungsverhalten der Dichtungsvorrichtung und auch auf die Schmutz-Abstreiffunktion positiv auswirkt.

Die Dichtungsringe liegen in den jeweiligen Ringnuten bevorzugt so ein, dass zwischen dem jeweiligen Dichtungsring und dem jeweiligen Nutengrund ein Freiraum besteht, der es ermöglicht, dass der Dichtungsring in gewissen Grenzen innerhalb des Freiraums in die Ringnut bei radialer Auslenkung der Kolbenstange zurückweichen kann. Damit erhält man auch bei radialen Auslenkungen der Kolbenstange stets ein gleichmäßiges Anliegen der Dichtungslippen der Dichtungsringe an der Kolbenstange, wodurch eine optimale Abdichtung auch bei radialen Auslenkungen der Kolbenstange gewährleistet ist. Der die Dichtungslippe bildende Dichtungsrand des Dichtungsrings verläuft zumindest im entspannten Zustand des Dichtungsrings in spitzem Winkel zum oberen Teil der Kolbenstange. Dies bedeutet, dass der Dichtungsrand in spitzem Winkel zur oberen Öffnung des Gehäuses der Dichtungsvorrichtung weist, durch die die Kolbenstange in das jeweilige Teleskoprohr hineinragt. Die derartige Ausrichtung des Dichtungsrandes ergibt eine verbesserte Abdichtungsfunktion gegenüber einem zur Kolbenstange achsparallel verlaufenden Dichtungsrand.

Bevorzugt sind am Dichtungsgehäuse zwei oder mehr Ringnuten mit einliegenden Dichtungsringen axial beabstandet angeordnet, wobei die Ringnuten und Dichtungsringe in unterschiedlichen Ausrichtungen zur Kolbenstange angeordnet sein können. So kann beispielsweise sehr vorteilhaft im oberen Öffnungsbereich des Gehäuses der Dichtungsvorrichtung eine geneigte Anordnung der Ringnuten und Dichtungsringe in stumpfem Winkel vorgesehen werden, während im unteren Bereich des Gehäuses die Ringnuten in stumpfem Winkel nach unten ausgerichtet sind. Zwischen den geneigt ausgerichteten Ringnuten können radial bezogen auf die Kolbenstange verlaufende Ringnuten mit Dichtungsringen vorgesehen sein. Eine derartige Anordnung unterschiedlich ausgerichteter Ringnuten kann für bestimmte Anwendungsfälle sehr vorteilhaft sein, um eine besonders hohe Abdichtfunktion mit gleichzeitiger Vibrationsdämpfungsfunktion zu erhalten.

Die Dichtungsvorrichtung kann im oberen Bereich eines Teleskoprohres mittels Presspassung oder durch eine Schraubverbindung am Teleskoprohr befestigt sein, um das Teleskoprohr gegenüber der Kolbenstange abzudichten.

Weiterhin besteht die sehr vorteilhafte Möglichkeit, wenigstens eine Ringnut über einen Druckkanal mit variablem Druck zu beaufschlagen, um den Anpressdruck des in der Ringnut einliegenden Dichtungsrings an der Kolbenstange zu steuern.

Die Erfindung wird nachfolgend anhand von in der Zeichnung dargestellten Ausführungsbeispielen näher erläutert.

Es zeigen:
Figur 1 eine Teilansicht einer Teleskopgabel mit einer Dichtungsvorrichtung,
Figur 2 ein im Schnitt dargestelltes Gehäuse einer Dichtungsvorrichtung mit waagerecht ausgerichteten Ringnuten,
Figur 3 ein weiteres im Schnitt dargestelltes Gehäuse einer Dichtungsvorrichtung mit geneigt ausgerichteten Ringnuten,
Figur 4 eine vergrößerte Detailansicht von Figur 3 im Bereich einer Ringnut mit im Öffnungsbereich vorgesehenen Erhebungen,
Figur 5 und Figur 6 weitere Detailansichten einer Dichtungsvorrichtung mit waagerecht beziehungsweise geneigt ausgerichteten Ringnuten.

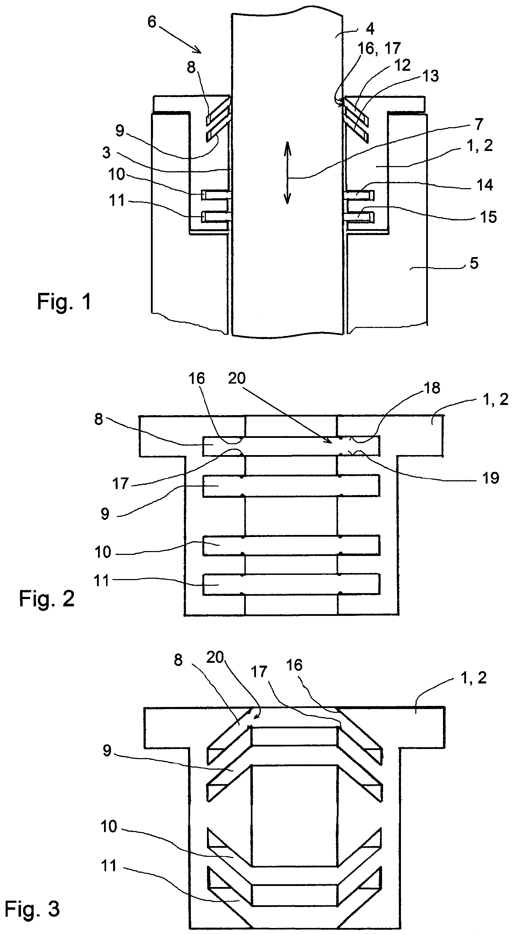

In Figur 1 ist eine Teleskopgabel für ein Fahrrad im Bereich einer Dichtungsvorrichtung 1 im Schnitt dargestellt. Das Gehäuse 2 der Dichtungsvorrichtung 1 ist ein rotationssymmetrisches Teil aus Metall oder Kunststoff, welches mittig einen zylindrischen Durchgangsraum 3 hat, der auch als Führungsraum oder Dichtungsraum bezeichnet werden kann. Im Durchgangsraum 3 liegt eine Kolbenstange 4 ein, die in ein Rohr 5 der Teleskopgabel 6 eintaucht. Während der Dämpfungs- und Federungsfunktion führt die Kolbenstange 4 bezogen auf das Rohr 5 der Teleskopgabel 6 eine Hubbewegung entsprechend der Pfeilrichtung 7 durch.

Die Dichtungsvorrichtung 1 besitzt im dargestellten Ausführungsbeispiel insgesamt vier Ringnuten 8 bis 11, in denen Dichtungsringe 12 bis 15 einliegen. Dabei sind die oberen Ringnuten 8, 9 sowie die in ihnen einliegenden Dichtungsringe 12, 13 gegenüber der Axialrichtung der Kolbenstange 4 geneigt ausgerichtet, und zwar mit einem stumpfen Neigungswinkel. Dagegen sind die im unteren Bereich der Dichtungsvorrichtung 1 angeordneten Ringnuten 10, 11 mit ihren Dichtungsringen 14, 15 waagerecht ausgerichtet beziehungsweise senkrecht zur Axialrichtung der Kolbenstange 4. Die Kolbenstange 4 und das Rohr 5 sind Teil einer an sich bekannten hydraulischen oder pneumatischen Federungs- und Dämpfungsvorrichtung, wie diese in Teleskopgabeln von Fahrrädern Verwendung finden. Die pneumatischen oder hydraulischen Dämpfungseinrichtungen sind nicht Gegenstand der vorliegenden Erfindung, sondern eben die Dichtungsvorrichtung 1 im oberen Bereich des Rohres 5, in welches die Kolbenstange 4 hineinragt.

Die Dichtungsringe 12 bis 15 haben eine geringfügig geringere Dicke als die Öffnungsweite der zugehörigen Ringnuten 8 bis 11. Jedoch sind in den Ringnuten 8 bis 11 an gegenüberliegenden Innenseiten Erhebungen vorgesehen, die so bemessen sind, dass diese an die Seitenflächen der Dichtungsringe 12 bis 15 drücken. Die Dichtungsringe 12 bis 15 werden dadurch mit einer geringen seitlichen Druckkraft mittig in den Ringnuten 8 bis 11 gehalten, wobei aber bei einer radialen Auslenkung der Kolbenstange 4 bezogen auf die Dichtungsvorrichtung 1 dennoch eine seitliche Verschiebung der Dichtungsringe innerhalb der Ringnuten möglich ist.

Die Dichtungsringe 12 bis 15 haben im entspannten Zustand einen geringfügig kleineren Innendurchmesser als der Durchmesser der Kolbenstange 4.

Anhand der nachfolgenden Figuren 2 bis 6 wird die Anordnung der Erhebungen in den Ringnuten und deren Funktion näher erläutert.

Figur 2 zeigt eine gegenüber Figur 1 vergrößerte Schnittansicht eines Gehäuses 2 einer Dichtungsvorrichtung 1, dessen Ringnuten senkrecht zur Axialrichtung des Gehäuses 2 ausgerichtet sind. In Ringnuten 8 bis 11 sind Erhebungen 16, 17 vorgesehen, die an gegenüberliegenden Innenseiten 18, 19 der Ringnuten 8 bis 11 im zur Kolbenstange weisenden Bereich der Nutöffnung 20 vorgesehen sind.

Im Bereich der zur Kolbenstange weisenden Nutöffnung 20 der Ringnuten 8 bis 11 können die Erhebungen 16, 17 aber auch an den Dichtungsringen 12 bis 15 angeordnet sein, wodurch ebenfalls eine verbesserte Abdichtfunktion mit gleichzeitiger Vibrationsdämpfungsfunktion erreicht wird.

Figur 3 zeigt eine Ausführung eines Gehäuses 2 einer Dichtungsvorrichtung 1 mit geneigt ausgerichteten Ringnuten 8 bis 11, die ebenfalls im Bereich der Nutöffnung 20 Erhebungen 16, 17 besitzen.

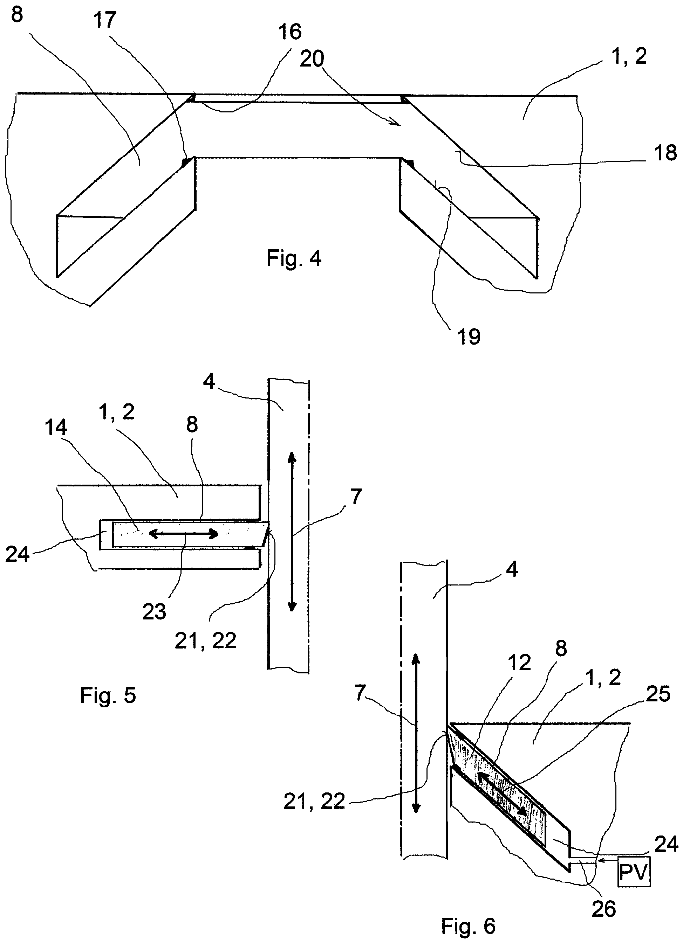

Eine vergrößerte Darstellung einer geneigten Ringnut 8 ist in Figur 4 dargestellt. Im Bereich der Nutöffnung 20 befinden sich im Querschnitt dreieckig geformte Erhebungen 16, 17, deren Spitzen gegen einen hier nicht dargestellten Dichtungsring ausgerichtet sind und an diesem mit geringem Druck anliegen, um den Dichtungsring mit einer gewissen Reibungskraft in seiner Position in der Ringnut 8 zu halten.

Figur 5 zeigt eine Detailansicht im Bereich einer waagrecht ausgerichteten Ringnut 8 gemäß Figur 2, in der ein entsprechend ausgerichteter Dichtungsring 14 einliegt. Der Dichtungsring 8 liegt mit seinem Dichtungsrand 21, der eine abgewinkelte Dichtungslippe 22 bildet, an der Kolbenstange 4 an. Bei einer radialen Auslenkung der Kolbenstange 4 kann der Dichtungsring 14 entsprechend der Pfeilrichtung 23 innerhalb der Ringnut 8 verschoben werden, sodass dessen Dichtungsrand 21 immer optimal die Kolbenstange 4 umschließt. Damit diese Verschiebbarkeit entsprechend der Pfeilrichtung 23 für den Dichtungsring 14 gegeben ist, ist am Nutengrund der Ringnut 8 ein Freiraum 24 vorgesehen.

Die Darstellung von Figur 6 zeigt nun ein Ausführungsbeispiel mit geneigt ausgerichteter Ringnut 8, wie aus Figur 1 und Figur 3 ersichtlich. Ein entsprechend geformter Dichtungsring 12 liegt auch hier, wie bei Figur 5, entsprechend einer Pfeilrichtung 25 verschieblich in der Ringnut 8 ein, weshalb auch hier im Bereich des Nutengrunds ein Freiraum 24 vorgesehen ist.

Der eine Dichtungslippe 22 bildende Dichtungsrand 21 liegt in spitzem Winkel an der Umfangsfläche der Kolbenstange 4 an und dichtet damit die Kolbenstange 4 gegenüber dem Innenraum des Rohres 5 von Figur 1 gegen von außen eindringenden Schmutz oder gegen Feuchtigkeitseinwirkungen ab.

Die an den Dichtungsringen angreifenden Erhebungen 16, 17 haben außer einer Führungs- und Dämpfungsfunktion bezogen auf die an ihnen anliegenden Dichtungsringe auch eine Abdichtungsfunktion für die jeweiligen Ringnuten 8 bis 11. Diese Abdichtungsfunktion wird optimal durch ringförmig an den Innenseiten der Ringnuten angeordnete Erhebungen erreicht. Werden nur punktförmig angeordnete Erhebungen an den Innenseiten vorgesehen, so kann damit eine Abdichtungsfunktion im Bereich der Nutöffnungen 20 zwar nicht beziehungsweise nicht vollständig erreicht werden, jedoch kann eine solche Ausführung von punktförmigen oder segmentförmigen Erhebungen für bestimmte Anwendungsfälle zweckmäßig sein, wenn beispielsweise geringere Dämpfungsfunktionen für die seitliche Verschiebbarkeit der Dichtungsringe erreicht werden soll.

In Figur 6 ist auch angedeutet, dass die Ringnut 8 über einen Druckkanal 26 mit variablem Druck PV beaufschlagt werden kann, um den Anpressdruck des in der Ringnut 8 einliegenden Dichtungsrings 12 an der Kolbenstange 4 zu steuern.

## Patentansprüche

1. Dichtungsvorrichtung mit einem eine Kolbenstange (4) umschließenden Gehäuse (2), das an seiner der Kolbenstange (4) zugewandten zylindrischen Innenseite wenigstens eine Ringnut (8 - 11) hat, in die ein an der Kolbenstange (4) mit Dichtungslippen (22) anliegender Dichtungsring (12 - 15) in Form einer Ringscheibe eingesetzt ist, wobei die Ringnut (8 -11) an gegenüberliegenden Seitenwänden (18, 19) wenigstens jeweils eine gegen den in ihr einliegenden Dichtungsring (12 - 15) drückende Erhebung (16, 17) hat, **dadurch gekennzeichnet, dass** in wenigstens einer Ringnut (8 - 11) im Bereich ihrer zur Kolbenstange (4) weisenden Nutöffnung (20) Erhebungen (16, 17) einander gegenüberliegend angeordnet sind, die seitliche Bewegungen des Dichtungsrings (12 - 15) dämpfen.

2. Dichtungsvorrichtung nach Anspruch 1, **dadurch gekennzeichnet, dass** die Erhebungen (16, 17) jeweils einen Ringrand bilden.

3. Dichtungsvorrichtung nach einem der Ansprüche 1 oder 2, **dadurch gekennzeichnet, dass** im Bereich der Erhebungen (16, 17) der Ringraum der Ringnut (8 - 11) um weniger als 5% eingeengt ist.

4. Dichtungsvorrichtung nach einem der vorhergehenden Ansprüche, **dadurch gekennzeichnet, dass** wenigstens eine Ringnut (8 - 11) und der in dieser einliegende Dichtungsring (12 - 15) gegenüber der Axialrichtung der Kolbenstange (4) geneigt ausgerichtete Seitenwände (18, 19) haben.

5. Dichtungsvorrichtung nach Anspruch 4, **dadurch gekennzeichnet, dass** die Seitenwände (18, 19) der jeweiligen Ringnut (8 - 11) und des einliegenden Dichtungsrings (12 - 15) mit einem stumpfen Neigungswinkel gegenüber der Axialrichtung der Kolbenstange (4) ausgerichtet sind.

6. Dichtungsvorrichtung nach einem der vorhergehenden Ansprüche, **dadurch gekennzeichnet, dass** zwischen dem Dichtungsring (12 - 15) und dem Nutengrund der den Dichtungsring (12 - 15) aufnehmenden Ringnut (8 - 11) ein Freiraum (24) vorgesehen ist.

7. Dichtungsvorrichtung nach einem der vorhergehenden Ansprüche, **dadurch gekennzeichnet, dass** der der Kolbenstange (4) zugewandte Dichtungsrand (21) zumindest im entspannten Zustand des Dichtungsrings (12 - 15) in spitzem Winkel zum oberen Teil der Kolbenstange (4) ausgerichtet ist.

8. Dichtungsvorrichtung nach einem der vorhergehenden Ansprüche, **dadurch gekennzeichnet, dass** zwei oder mehr Ringnuten (8 - 11) mit einliegenden Dichtungsringen (12 - 15) im Gehäuse (2) der Dichtungsvorrichtung (1) axial beabstandet angeordnet sind.

9. Dichtungsvorrichtung nach Anspruch 8, **dadurch gekennzeichnet, dass** die Ringnuten (8 - 11) in unterschiedlichen Ausrichtungen zur Kolbenstange (4) angeordnet sind.

10. Dichtungsvorrichtung nach einem der vorhergehenden Ansprüche, **dadurch gekennzeichnet, dass** die Dichtungsvorrichtung (1) im oberen Bereich eines Teleskoprohres befestigt ist, in welches die Kolbenstange (4) axial beweglich eintaucht, und mit ihren Dichtungsringen (12 - 15) die Kolbenstange (4) gegenüber dem Innenraum des Teleskoprohrs abdichtet.

11. Dichtungsvorrichtung nach einem der vorhergehenden Ansprüche, **dadurch gekennzeichnet, dass** wenigstens eine Ringnut (8) über einen Druckkanal (26) mit variablem Druck (PV) beaufschlagbar ist.

## Claims

1. Seal device with a housing (2) which envelops a piston rod (4), the housing (2) including at least one ring groove (8 - 11) at a cylindrical inside that is oriented towards the piston rod (4), wherein a seal ring (12 - 15) configured as an annular disc which rests against the piston rod (4) with sealing lips (22) is inserted in the at least one ring groove (8 - 11), whereby the ring groove (8 - 11) at opposite side walls (18, 19) each has at least one protrusion (16, 17) which press against the inserted seal ring (12 - 15), **characterized in that,** in at least one ring groove (8 - 11) in a portion of the ring groove opening (20) oriented towards the piston rod (4), protrusions (16, 17) are arranged opposite of each other which damp lateral movement of the seal ring (12 - 15).

2. Seal device according to claim 1, **characterized in that** the protrusions (16, 17) respectively form an annular edge.

3. Seal device according to one of the claims 1 or 2, **characterized in that** in a portion of the protrusions (16, 17) the ring space of the ring groove (8 - 11) is restricted by less that 5%.

4. Seal device according to any of the preceding claims, **characterized in that** at least one ring groove (8 - 11) and the seal ring (12 - 15) inserted therein have side walls (18, 19) that are inclined relative to the axial direction of the piston rod (4).

5. Seal device according to claim 4, **characterized in that** the side walls (18, 19) of the respective ring groove (8 - 11) and the seal ring (12 - 15) inserted therein are oriented at an obtuse angle with respect to the axial direction of the piston rod (4).

6. Seal device according to any of the preceding claims, **characterized in that** a free space (24) is provided between the seal ring (12 - 15) and a groove base of the ring groove that receives the seal ring (12 - 15).

7. Seal device according to any of the preceding claims, **characterized in that** the seal edge (21) oriented towards the piston rod (4) is arranged at an acute angle relative to the upper portion of the piston rod (4) at least in an unloaded condition of the seal ring (12 - 15).

8. Seal device according to any of the preceding claims, **characterized in that** two or more ring grooves (8 - 11) with seal rings (12 - 15) inserted therein are arranged axially offset in the housing (2) of the seal device (1).

9. Seal device according to claim 8, **characterized in that** the ring grooves (8 - 11) are arranged at different orientations relative to the piston rod (4).

10. Seal device according to any of the preceding claims, **characterized in that** the seal device (1) is attached in an upper portion of a telescope tube into which the piston rod (4) penetrates axially moveable and which seals the piston rod (4) with its seal rings (12 - 15) relative to the inner space of the telescope tube.

11. Seal device according to any of the preceding claims, **characterized in that** at least one ring groove (8) is loadable with a variable pressure through a pressure channel (26).

## Revendications

1. Dispositif d'étanchement muni d'un boîtier (2) ceinturant une tige (4) de piston et comportant, sur sa face intérieure cylindrique tournée vers ladite tige (4) de piston, au moins une rainure annuaire (8-11) dans laquelle est encastrée une bague d'étanchement (12-15) revêtant la forme d'un disque annulaire en applique contre ladite tige (4) de piston par des lèvres d'étanchement (22), la rainure annuaire (8-11) étant pourvue, sur des parois latérales opposées (18, 19), d'au moins une protubérance (16, 17) respective qui exerce une pression sur la bague d'étanchement (12-15) intégrée dans ladite rainure, **caractérisé par le fait que** des protubérances (16, 17) agencées en vis-à-vis mutuel dans au moins une rainure annuaire (8-11), dans la région de son ouverture (20) pointant vers la tige (4) de piston, amortissent des mouvements latéraux de la bague d'étanchement (12-15).

2. Dispositif d'étanchement selon la revendication 1, **caractérisé par le fait que** les protubérances (16, 17) donnent respectivement naissance à un rebord annulaire.

3. Dispositif d'étanchement selon l'une des revendications 1 ou 2, **caractérisé par le fait que** l'espace annulaire de la rainure annuaire (8-11) est resserré de moins de 5 % dans la région des protubérances (16, 17).

4. Dispositif d'étanchement selon l'une des revendications précédentes, **caractérisé par le fait qu'**au moins une rainure annuaire (8-11), et la bague d'étanchement (12-15) intégrée dans cette dernière, sont dotées de parois latérales (18, 19) orientées avec inclinaison par rapport à la direction axiale de la tige (4) de piston.

5. Dispositif d'étanchement selon la revendication 4, **caractérisé par le fait que** les parois latérales (18, 19) de la rainure annuaire (8-11) considérée, et de la bague d'étanchement (12-15) intégrée, sont orientées suivant un angle obtus d'inclinaison par rapport à la direction axiale de la tige (4) de piston.

6. Dispositif d'étanchement selon l'une des revendications précédentes, **caractérisé par le fait qu'**un espace libre (24) est prévu entre la bague d'étanchement (12-15) et le fond de la rainure annulaire (8-11) recevant ladite bague d'étanchement (12-15).

7. Dispositif d'étanchement selon l'une des revendications précédentes, **caractérisé par le fait que** le bord d'étanchement (21) tourné vers la tige (4) de piston est orienté, au moins à l'état soulagé de la bague d'étanchement (12-15), à angle aigu par rapport à la partie supérieure de ladite tige (4) de piston.

8. Dispositif d'étanchement selon l'une des revendications précédentes, **caractérisé par le fait que** des rainures annulaires (8-11) au nombre de deux ou plus, dans lesquelles des bagues d'étanchement (12-15) sont intégrées, sont agencées avec espacement axial dans le boîtier (2) dudit dispositif d'étanchement (1).

9. Dispositif d'étanchement selon la revendication 8, **caractérisé par le fait que** les rainures annulaires (8-11) sont agencées suivant des orientations différentes par rapport à la tige (4) de piston.

10. Dispositif d'étanchement selon l'une des revendications précédentes, **caractérisé par le fait que** ledit dispositif d'étanchement (1) est fixé dans la région supérieure d'une tubulure télescopique dans laquelle la tige (4) de piston pénètre avec mobilité axiale, et assure, par ses bagues d'étanchement (12-15), l'étanchéité de ladite tige (4) de piston vis-à-vis de l'espace interne de ladite tubulure télescopique.

11. Dispositif d'étanchement selon l'une des revendications précédentes, **caractérisé par le fait qu'**au moins une rainure annulaire (8) peut être sollicitée par une pression variable (PV), par l'intermédiaire d'un canal de pression (26).
